# EUROPÄISCHE PATENTSCHRIFT

(11) **EP 2 558 719 B1**
(45) Veröffentlichungstag und Bekanntmachung des Hinweises auf die Patenterteilung: **27.07.2016**
(21) Anmeldenummer: 11715497.1
(22) Anmeldetag: 14.04.2011
(51) Int. Cl.: F03D 13/20, E04H 12/28

(54) **WINDENERGIEANLAGE MIT MODULAREM TURMSYSTEM UND MONTAGEVERFAHREN**
WIND POWER PLANT WITH MODULAR TOWER SYSTEM
ÉOLIENNE COMPORTANT UN SYSTÈME DE TOUR MODULAIRE

(30) Priorität: 15.04.2010 DE 102010015075
(43) Veröffentlichungstag der Anmeldung: 20.02.2013
(73) Patentinhaber: Senvion GmbH, 22297 Hamburg (DE)
(72) Erfinder: SAMUELSEN, Olaf, 24852 Jerrisbek (DE)
(74) Vertreter: Glawe, Delfs, Moll
(86) Internationale Anmeldenummer: PCT/EP2011/055969
(87) Internationale Veröffentlichungsnummer: WO 2011/141270

(56) Entgegenhaltungen:
- EP-A2- 2 093 417
- WO-A1-2004/031578
- WO-A2-00/36724
- WO-A2-2008/000565
- DE-A1- 10 305 689
- US-A1- 2009 031 668

## Beschreibung

Die Erfindung betrifft einen Turm für Windenergieanlagen bestehend aus einer Vielzahl von übereinander angeordneten Turmsegmenten, die einen Turminnenraum umschließen, und darin angeordneten Systemkomponenten, wie Leistungsleitmittel, Signalleitmittel und Steigeinrichtungen für Bedienpersonal. Die Erfindung erstreckt sich weiter auf ein entsprechendes Verfahren zur Errichtung eines solchen Turms.

Zum Bau von Windenergieanlagen großer Leistung werden hohe Türme benötigt. Gründe hierfür sind, dass mit steigender Leistung der Windenergieanlagen immer größere Rotoren erforderlich werden und dass außerdem die Windstärke mit größerer Höhe zunimmt. Daher müssen die Türme nicht nur eine größere Höhe erreichen, sondern auch zur Aufnahme von immer leistungsstärkeren Windenergieanlagen ausgelegt sein. Da die Türme für einen Transport im Ganzen viel zu groß sind, werden sie erst lokal auf der Baustelle aufgebaut. Besonders bewährt hierfür haben sich Betontürme, die aus einer Mehrzahl übereinander angeordneter hülsenartiger Turmsegmente errichtet werden, wobei die Turmsegmente auf der Baustelle vollständig oder teilweise aus Halbfertigelementen hergestellt werden (WO 2004/031578 A1). Während auf diese Weise eine rationelle Fertigung auch hoher Türme in abgelegenen Gegenden erreicht werden kann, so stellt sich noch das Problem der Herstellung und Montage der Turmeinbauten. Zu den Turmeinbauten gehören die Komponenten, welche zur Übertragung der von der Windenergieanlage erzeugten elektrischen Leistung von der Gondel in den Turmfuß dienen, wie bspw. Leitungsmittel zur Leistungsübertragung oder zur Steuerung des Betriebs der Windenergieanlage sowie Steigeinrichtungen für das Bedienpersonal, damit dieses im Turm aufsteigen kann. Die Installation dieser Turmeinbauten in den errichteten Turm ist aufwendig und, da die Arbeit teilweise auch in größeren Höhen durchgeführt werden muss, gefährlich.

Aus WO 2008/000565 A2 ist bekannt, innerhalb des Windenergieanlagenturms eine Tragstruktur bereitzustellen, die im Wesentlichen die gesamte Höhe des Turms überspannt. Die Tragstruktur weist keine feste Verbindung zur Turmwand auf. An der Tragstruktur werden die Turmeinbauten befestigt. Weiter dient die Tragstruktur bei der Installation der Leistungsleitmittel als Hülse zum Führen der Kabel, wodurch die Sicherheit der Installation erhöht wird. Allerdings ist nachteilig, dass die Installation der weiteren Systemkomponenten weiter in größeren Höhen durchgeführt werden muss.

Zur Vereinfachung ist es zum Beispiel bei Stahlrohrtürmen bekannt, einzelne zylinderartige Turmsegmente zumindest teilweise im Werk oder auf der Baustelle vorzumontieren mit Stromschienen oder Leistungskabeln auf der Turminnenseite (US 2009/0031668 A1). Der Vorteil hierbei ist, dass gerade wegen der hohen zu übertragenden Leistung kräftig dimensionierte Stromschienen oder Leistungskabel nicht mehr auf der Baustelle im bereits errichteten Turm montiert zu werden brauchen, sondern sich bereits von vornherein im Turmsegment befinden. Ein Nachteil hierbei ist, dass dies nur für Turmsegmente bis zu einer gewissen Größe (knapp 4 m Durchmesser) praktikabel ist, da bei größeren Turmsegmenten der Straßentransport kaum noch durchführbar ist.

Der Erfindung liegt die Aufgabe zu Grunde, die genannten Nachteile zu vermeiden und eine universellere Möglichkeit zur Montage der Turmeinbauten zu schaffen, die sowohl bei Rohrtürmen als auch bei aus vorgefertigten Betonsegmenten hergestellten Betontürmen oder bei Hybridtürmen (unten Beton, oben Rohr) oder solchen aus nicht vorgefertigten Betonsegmenten praktikabel ist.

Die erfindungsgemäße Lösung liegt in den Merkmalen der unabhängigen Ansprüche. Vorteilhafte Weiterbildungen sind Gegenstand der abhängigen Ansprüche.

Bei einem Windenergieanlagenturm bestehend aus einer Vielzahl von übereinander angeordneten Turmsegmenten, die einen Turminnenraum umschließen, und darin angeordneten Systemkomponenten, umfassend Leitmittel, Leuchtmittel und/oder eine Steigeinrichtung für Bedienpersonal, ist gemäß der Erfindung vorgesehen, dass Segmente für mindestens zwei jener Systemkomponenten mit mindestens einem Segment eines Trägers baulich zusammengefasst sind zu einem gesonderten, mehrere Turmsegmente überspannenden Versorgungsmodul.

Kern der Erfindung ist der Gedanke, die einzelnen Systemkomponenten, wie zum Beispiel Leitmittel, Leuchtmittel und auch die Steigeinrichtung, wobei die Leitmittel insbesondere Leistungsmittel und/oder Signalleitmittel umfassen können, segmentweise vorzumontieren als ein eigenständiges Versorgungsmodul. Die ganzen aufwendigen Montageschritte zur Befestigung und Kontaktierung bzw. isolierten Anordnung an dem Versorgungsmodul können dabei ebenerdig durchgeführt werden. Ist das Versorgungsmodul fertig gestellt, so kann es als Ganzes angehoben und in den Innenraum des aus einer Vielzahl von Turmsegmenten bestehenden Turms eingesetzt werden. Es verbleibt dann lediglich noch, dass das Versorgungsmodul an einigen Stellen an der Turminnenwand befestigt werden muss. Da das Versorgungsmodul erfindungsgemäß mehrere Turmsegmente überspannt, und nur noch die Befestigungsarbeiten bzw. ein Anschluss an das benachbarte Versorgungsmodul erforderlich sind, ist ein schneller Einbau ermöglicht. Grundsätzlich gilt, dass je mehr Einrichtungen auf dem Versorgungsmodul angeordnet sind, desto größer ist die Aufwandsersparnis durch die Erfindung. Jedoch versteht es sich, dass nicht zwingend alles auf dem Versorgungsmodul angeordnet zu sein braucht; beispielsweise können Signalleitmittel auch frei herabhängend im Turm angeordnet sein oder es sind nur Halter für die eigentlichen Signalleitmittel angeordnet, in welchen die Signalleitmittel platziert werden.

Hierbei sind vorzugsweise besondere Halteradapter für das Versorgungsmodul vorgesehen, die eine schnelle Montage in dem Turminnenraum ermöglichen. Vorzugsweise sind je Versorgungsmodul mindestens ein Festlagerhalteradapter und ein Loslagerhalteradapter vorgesehen. Damit wird nicht nur ein Minimum an zusätzlich erforderlicher Montagearbeit erreicht, wobei mit dem Loslager eine Feinpositionierung zur Erreichung eines nahtlosen Anschlusses an benachbarte Versorgungsmodule leicht durchgeführt werden kann. Es hat sich bewährt, den Festlagerhalteradapter jeweils im oberen Bereich des Versorgungsmoduls anzuordnen.

Weiter ist es zweckmäßig, wenn die Halteradapter je nach lichter Weite des Turminnenraums verschieden ausgeführt sind. So können die Halteradapter für die Turmsegmente mit einer großen lichten Weite (Durchmesser), die bei einem üblichen konischen Turm also im unteren Bereich eingesetzt werden, einen höheren Horizontalabstand des Versorgungsmoduls von der Turminnenwand herstellen als in weiter oben gelegenen Turmsegmenten mit einer geringeren lichten Weite. Damit kann erreicht werden, dass identische Versorgungsmodule über die gesamte Höhe des Turms verwendet werden können, wobei nur die Halteradapter verschieden sind zur Anpassung an die unterschiedliche Form und Größe der jeweiligen Turmsegmente. Sowohl die Halteradapter als auch der Träger können zum Beispiel aus gekantetem Blech und/oder Rohrmaterial (rund oder vierkant) hergestellt sein. Zweckmäßigerweise sind die Versorgungsmodule so dimensioniert, dass sie eine Länge aufweisen, die wesentlich größer ist als die Höhe eines Turmsegments. Unter wesentlich größer wird hierbei verstanden, dass die Versorgungsmodule vorzugsweise mindestens drei Turmsegmente überspannen, jedoch vorzugsweise nicht länger sind als die Höhe von zehn Turmsegmenten im Interesse der Handhabbarkeit. Übliche Höhen eines Turmsegments aus Beton sind etwa 3 bis 4,5 m.

Die Versorgungsmodule sind zweckmäßigerweise mit Reihenschlusskupplungen an ihren Enden versehen. Damit kann eine Anreihbarkeit der Versorgungsmodule erreicht werden, wobei durch geeignete Ausführung der Reihenschlusskupplungen, bspw. als Stecksystem, durch einfaches Zusammenschieben sowohl eine mechanische wie auch elektrische Kupplung erreicht werden kann. Unter Reihenschlussverbindern werden solche elektrischen Elemente verstanden, die beim mechanischen Verbinden auch einen elektrischen Kontakt herstellen, wobei ggf. nur noch zusätzliche Sicherungs- oder Spanneinrichtungen zu montieren sind. Die kritische Montagetätigkeit innerhalb des Turms wird damit weiter vereinfacht. Bei der Vormontage der Versorgungsmodule am Boden werden die einzelnen Systemkomponenten an einem Träger angeordnet. Das Versorgungsmodul wird mit diesem Träger in den Turm eingesetzt. Der Träger kann aus mehreren Subsegmenten bestehen. Die einzelnen Subsegmente können direkt miteinander verbunden oder bspw. lediglich am Anfang und Ende des Versorgungsmoduls vorgesehen sein. Bei einer weiteren zweckmäßigen Ausführungsform kann der Träger integriert sein als eine der Systemkomponenten, insbesondere der Steigeinrichtung. So kann z. B. die Leiter derart stabil ausgeführt sein, dass sie als Träger fungiert. Es ist jedoch nicht zwingend erforderlich, dass der Träger nach der Montage im Turm verbleibt. Bei einer zweckmäßigen Ausführungsform kann vorgesehen sein, dass der Träger als Hilfsträger ausgeführt ist, der nach der Montage des Versorgungsmoduls im Turminnenraum entfernbar ist. Damit kann der Hilfsträger zur Vormontage weiterer Versorgungsmodule verwendet werden, was den Gesamtaufwand weiter verringert.

Die Steigeinrichtung kann eine Befahranlage (Fahrstuhl), Steighilfe und/oder eine Leiter umfassen. Für die Verbindung zwischen benachbarten Versorgungsmodulen sind vorzugsweise kurze Koppelstücke vorgesehen, die bei einer Leiter beispielsweise zwei bis drei Sprossen umfassen. Es kann aber auch eine Vollmodularisierung vorgesehen sein. Hat dabei eine für die Steigeinrichtung vorgesehene Leiter einen Sprossenabstand a, so beträgt die Länge der Versorgungsmodule vorzugsweise ein ganzzahliges Vielfaches des Sprossenabstands a. Weiter ist vorzugsweise für die Versorgungsmodule ein Längenmodulsystem vorgesehen, mit welchem verschiedene Längen mit einem Minimum an verschiedenen Versorgungsmodulen bei gleichzeitiger Wahrung des Sprossenabstands hergestellt werden können. Grundlage hierfür ist ein Längenmodul A, welches einem ganzzahligen Vielfachen des Sprossenmoduls (Abstand der Sprossen) a entspricht. Mit Vorteil ist die Länge eines ersten Versorgungsmoduls dann gleich einem ungeradzahligen Vielfachen des Moduls A, die Länge eines zweiten Versorgungsmoduls gleich einem geradzahligen Vielfachen des Moduls A, und schließlich die Länge eines dritten Versorgungsmoduls entsprechend der Länge des zweiten Versorgungsmoduls abzüglich eines Sprossenmoduls a. So kann bspw. das erste Versorgungsmodul die Länge einmal A, das zweite Versorgungsmodul die Länge zweimal A und das dritte Versorgungsmodul die Länge zweimal A minus a aufweisen. Weiter können noch vierte Versorgungsmodule vorgesehen sein, welche größere Längen aufweisen, die Vielfache des Moduls A sind, um so auch große Strecken rationell überbrücken zu können. Mit einem solchen Längenmodulsystem kann eine Vielzahl von verschiedenen Längen mit einer Mindestanzahl an verschiedenen Versorgungsmodulen abgedeckt werden, wobei gleichzeitig dank des Zusammenwirkens von Modul/Sprossenmodul gewährleistet ist, dass auch an Anschlussstellen benachbarter Versorgungsmodule der Sprossenabstand gleich bleibt.

In einer bevorzugten Ausführung könnte das erfindungsgemäße Versorgungsmodul im unteren Teil eines Hybridturms, welcher bspw. im oberen Teil aus einem Stahlrohrturm und im unteren Teil aus einem Betonturm besteht, eingesetzt sein. Die Systemkomponenten im Stahlrohrturm könnten vor Errichtung des Turms entweder im Werk oder auf der Baustelle vormontiert oder aber nach Errichtung des kompletten Stahlrohrturms oder einzelner Stahlrohrsegmente in diesem mittels des erfindungsgemäßen Versorgungsmoduls eingebaut werden. Der Einbau der Versorgungsmodule in den Betonteil des Hybridturms könnte erfolgen, sobald eine entsprechende Anzahl von Betonsegmenten aufeinander gesetzt und diese ausreichend stabilisiert sind. Möglich wäre jedoch auch, den Betonturm so weit aufzubauen, dass nacheinander mehrere Versorgungsmodule eingebaut werden können. In einer bevorzugten Vorgehensweise zur Errichtung eines Hybridturms würde zuerst der Betonturm mit den erfindungsgemäßen Versorgungsmodul ausgerüstet, bevor der Stahlrohrturm samt der vormontierten Systemkomponenten auf den Betonturm errichtet wird.

Sind in dem Betonturm Spannelemente zur vertikalen und/oder auch horizontalen Verspannung der einzelnen Betonsegmente vorgesehen, so würden die Versorgungsmodule vorzugsweise in einem Bereich an der Turmwand installiert sein, dessen unmittelbare Umgebung nicht von Spannelementen durchzogen ist.

Die Erfindung bezieht sich weiter auf ein entsprechendes Verfahren zum Errichten eines Windenergieanlagenturms. Zur Erläuterung wird auf die vorstehende Beschreibung verwiesen.

Die Erfindung wird nachfolgend unter Bezugnahme auf die beigefügte Zeichnung näher erläutert, in der vorteilhafte Ausführungsbeispiele dargestellt sind. Es zeigen:
- Fig. 1:: eine schematische Ansicht einer Windenergieanlage mit einem Turm gemäß einem Ausführungsbeispiel der Erfindung;
- Fig. 2:: eine perspektivische Teilansicht eines Versorgungsmoduls;
- Fig. 3:: eine Querschnittsansicht des Versorgungsmoduls gemäß Fig. 2;
- Fig. 4:: eine Montageansicht des Versorgungsmoduls in mehrere übereinander angeordnete Turmsegmente;
- Fig. 5:: Ausführungsformen von Reihenschlusskupplungen für die Versorgungsmodule;
- Fig. 6:: Anschlussstücke für Leitmittel und Steigeinrichtung;
- Fig. 7:: Beispiele für ein Versorgungsmodulsystem mit verschiedenen Längen; und
- Fig. 8:: eine alternative Ausführung des Turms als Hybridturm.

Eine Windenergieanlage gemäß einem Ausführungsbeispiel der Erfindung umfasst einen Turm 1 mit einer darauf in Azimutrichtung verschwenkbar angeordneten Gondel 2. An ihrer Stirnseite ist ein Windrotor 27 drehbar angeordnet, der über eine Rotorwelle 28 einen in der Gondel 2 angeordneten Generator 21 antreibt, um so elektrische Leistung zu erzeugen. Die elektrische Leistung wird über im Turm verlaufende Leistungskabel als Leistungsleitmittel 22 zu einem am Turmfuß angeordneten Maschinentransformator 29 geführt, welcher die Spannung auf eine zur Übertragung in einem Netz erforderliche Spannung anpasst (es sei angemerkt, dass die Lokalisierung des Maschinentransformators an sich unerheblich ist; er kann genauso gut oben in der Gondel 2 oder auf einem Zwischenniveau angeordnet sein). Weiter ist in der Gondel eine Betriebssteuerung 20 angeordnet. Sie ist über gleichfalls im Turm verlaufende Signalleitungsmittel 23 mit dem Turmfuß verbunden, wo Anschlüsse für weitere Signalquellen und Signalempfänger vorgesehen sind. Schließlich ist in dem Turm eine Leiter 24 an der Turminnenwand angeordnet, welche als Steigeinrichtung für Bedienpersonal fungiert, das zu Wartungszwecken in die Gondel 2 aufsteigt.

Der Turm 1 ist mehrteilig aus einer Vielzahl von übereinander angeordneten hülsenartigen Turmsegmenten 10, 11, 12, 13, 14 aufgebaut. Bei den einzelnen Segmenten kann es sich um vorgefertigte Ringe, bspw. aus Betonmaterial handeln, oder um auf der Baustelle aus Halbfertigteilen zusammengesetzte oder vollständig gegossene Betonringe. Zur Montage des Turms 1 wird zuerst der unterste Ring 10, welcher bspw. Anbauten für den Transformator 29 oder Vorrichtungen für einen Einstieg in das Turminnere aufweist, auf das vorbereitete Fundament gesetzt, und darauf in der richtigen Reihenfolge die weiteren Turmsegmente 11, 12, 13, 14.

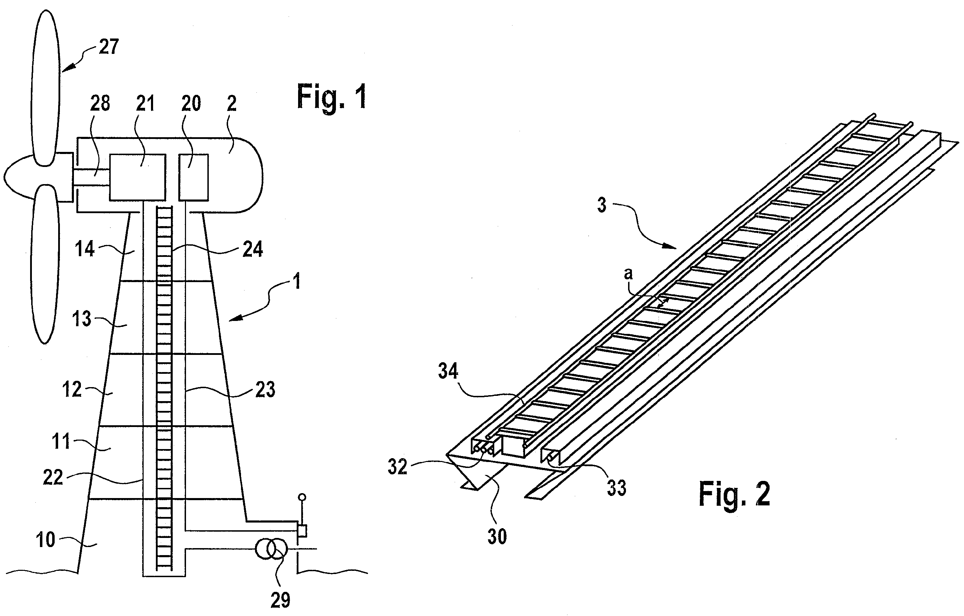

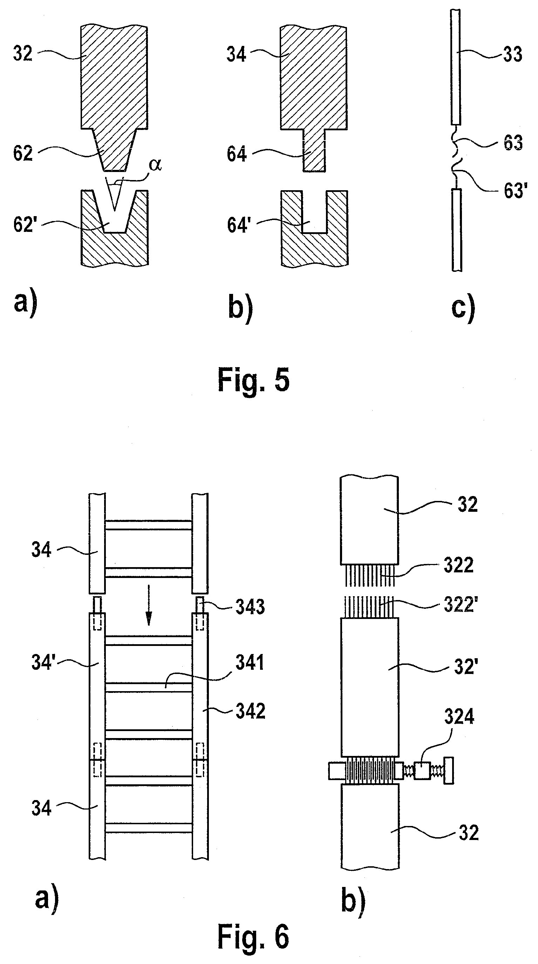

Die in Fig. 1 schematisiert dargestellte Anordnung der Leistungsleitmittel 22, der Signalleitmittel 23 und der Leiter 24 ist in Fig. 2 detaillierter dargestellt. Sämtliche vorgenannten Komponenten sind zusammengefasst zu einem Versorgungsmodul 3. Es umfasst einen Träger 30, der sich über eine Länge von mehreren Turmsegmenten, in dem dargestellten Ausführungsbeispiel seien drei Turmsegmente angenommen, erstreckt. Der Träger 30 kann aus einzelnen Subsegmenten bestehen. Die einzelnen Subsegmente können direkt miteinander verbunden oder bspw. lediglich am Anfang und Ende des Versorgungsmoduls 3 vorgesehen sein. In einer weiteren Ausführungsform kann vorgesehen sein, bspw. die Leiter derart stabil auszuführen, dass sie zumindest teilweise als Träger genutzt ist. Parallel zur Längsachse des Versorgungsmoduls 3 sind die Leiter 34, die Signalleitmittel 33 in einer dafür vorgesehenen Haltevorrichtung und schließlich die Leistungsleitmittel 32 in einer weiteren, speziell dafür ausgebildeten Haltevorrichtung angeordnet. Das Versorgungsmodul 3 ist vormontiert und wird als Ganzes, gehalten an seinem Träger 30, eingebracht in den Turminnenraum, der durch bereits montierte Turmsegmente 10, 11, 12 (siehe Fig. 5) gebildet ist. Das Versorgungsmodul 3 braucht dann nur über Befestigungen an seinem oberen und unteren Ende mit der Turminnenwand verbunden zu werden. Bei langen Versorgungsmodulen können zusätzliche Befestigungspunkte vorgesehen sein. Die aufwendige einzelne Montage der Leitmittel für elektrische Leistung bzw. Signale und die Leiter ist dank der Erfindung nicht mehr erforderlich.

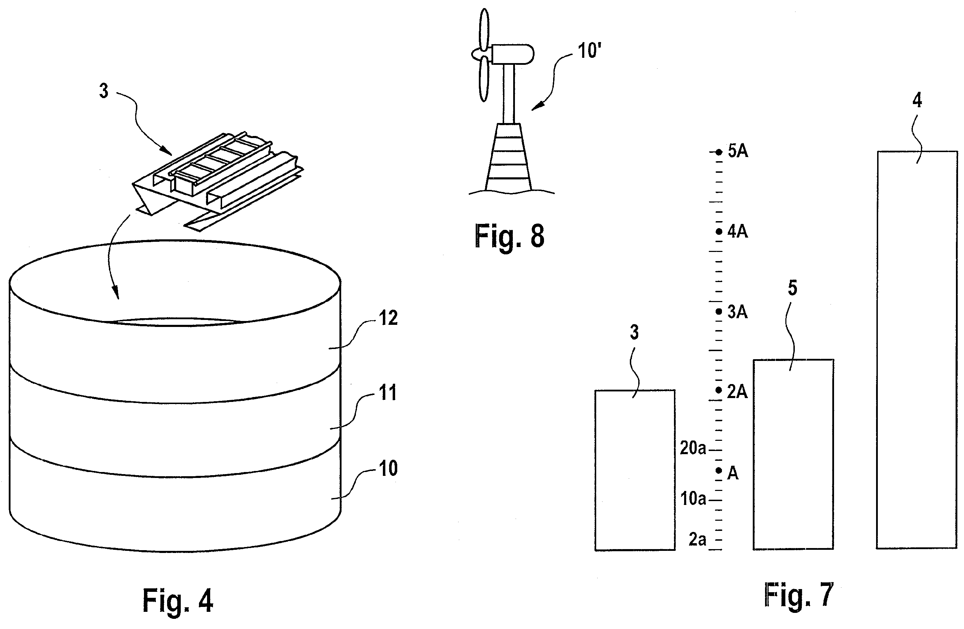

Zur Befestigung des Versorgungsmoduls 3 können Halteradapter 35 vorgesehen sein. Sie sind über eine Verschraubung 36 (oder eine Verklammerung) vormontiert an den Träger 30 des Versorgungsmoduls 3. Die Halteradapter 35 sind wiederum an ihrem anderen Ende mit einer Befestigungseinrichtung zur Anordnung an der Turminnenwand versehen, die vorzugsweise als Verschraubung mit Durchgangslöchern 37 (oder eine Verklammerung) an dem Halteradapter 35 ausgeführt ist. Dazu sind die Durchgangslöcher nur an einem Ende als Langlöcher 37' ausgeführt, so dass ein Loslager gebildet ist, während das gegenüberliegende Ende ohne Langlöcher ein Festlager bildet. Die Halteradapter 35 können verschiedene Abmessungen aufweisen, je nachdem in welchem Turmsegment 10, 11, 12, 13, 14 das Versorgungsmodul anzuordnen ist. So sind bezogen auf das Beispiel in Fig. 4 die Halteradapter 35 zur Montage des Versorgungsmoduls im Bereich der unteren Turmsegmente 10, 11 größer und geben dem Träger 30 einen größeren Abstand von der Turminnenwand als die Halteradapter 35, welche das Versorgungsmodul im Bereich des oberen Turmsegments 12 befestigen. Damit kann auf einfache Weise auch bei den üblichen konischen Turmformen eine vorzugsweise lotrechte Anordnung der Versorgungsmodule 3 erreicht werden.

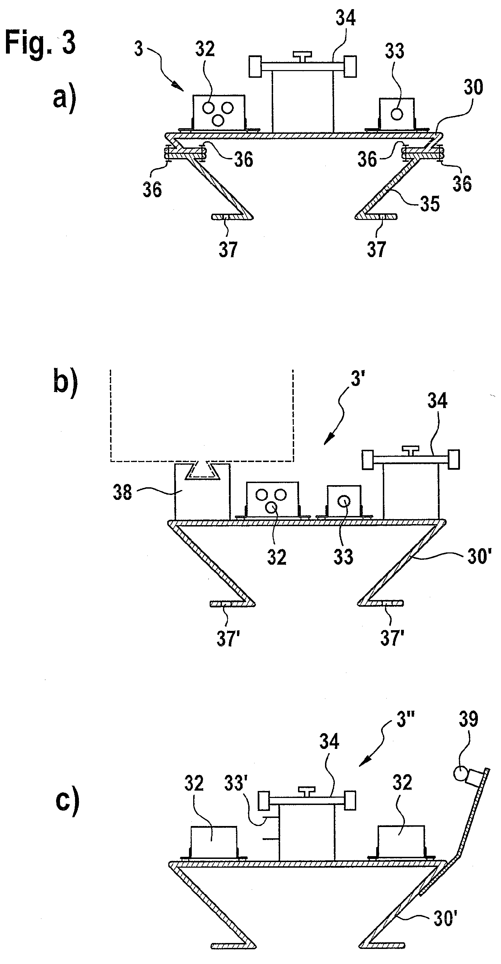

In Fig. 3a, b, c sind drei verschiedene Ausführungsformen für Versorgungsmodule 3, 3', 3" dargestellt. Die Ausführungsform in Fig. 3a entspricht der in Fig. 2 dargestellten, mit einer im Wesentlichen planen Trägerplatte, an deren Unterseite der Halteradapter 35 angeordnet ist und auf deren Oberseite über die Länge des Versorgungsmoduls 3 hinweg die Leiter 34, die Leistungsleitmittel 32 sowie die Signalleitmittel 33 angeordnet sind. In Fig. 3b ist eine alternative Ausführungsform dargestellt, bei welcher das Versorgungsmodul zur Aufnahme einer mechanischen Steigeinrichtung für das Bedienpersonal ausgebildet ist. Hierbei handelt es sich um einen Fahrkorb nach Art eines Aufzugs, wobei statt oder zusätzlich zu der Leiter 34 an der Trägerplatte 30' eine Führungsschiene 38 für den Fahrkorb (gestrichelt dargestellt) vorgesehen ist. Die Führungsschiene braucht nicht die Gewichtskraft des Fahrkorbs zu tragen, sondern hält ihn lediglich in der Spur, so dass sie nur verhältnismäßig geringe Kräfte aufzunehmen braucht. Dennoch kann es sich gerade bei dieser Konstruktion empfehlen, den Halteradapter integral mit der Trägerplatte 30' auszuführen, so dass insoweit eine einstückige Konstruktion entsteht. In Fig. 3c ist eine weitere alternative Ausführungsform dargestellt. Auf der Trägerplatte 30' mit integralem Halteradapter sind die Leiter 34 mittig und beidseitig von ihr Leistungsleitmittel 32 angeordnet. Eine Halterung 33' für Signalleitmittel 33 ist seitlich an dem Träger der Leiter 34 befestigt. Weiter ist ein Segment für ein Leuchtenband 39 an einem Ausleger der Trägerplatte 30' angeordnet.

Es sei noch angemerkt, dass eine Trägerplatte 30 nicht unbedingt für das Versorgungsmodul erforderlich ist. Sie kann auch als Hilfsträger ausgebildet sein, welcher zur Montage des Versorgungsmoduls dient und nach dem Verbinden des Versorgungsmoduls 3 über die Halteradapter 35 der Turminnenwand abgenommen werden kann. Dies hat den Vorteil der Wiederverwendbarkeit des Hilfsträgers 30 für weitere Versorgungsmodule.

Zur einfachen Verbindung aneinander grenzender Versorgungsmodule 3 sind für die einzelnen Komponenten geeignete Reihenschlusseinrichtungen vorgesehen. Sie sind in Fig. 5 näher dargestellt. Zur leichten Aneinanderkopplung der Leistungsleitmittel 32 sind an deren Enden jeweils ein konischer Vorsprung 62 bzw. eine konische Öffnung 62' vorgesehen. Die Tiefe der Öffnung 62' ist hierbei mindestens so groß wie das vorstehende Maß des Vorsprungs 62 plus einem Spiel von etwa 1 bis 3 mm. Durch den Konuswinkel α ist beim Einführen des Endes des einen Leistungsleitmittels 32 in das andere Ende des benachbarten Leistungsleitmittels 32 eine selbsttätige Zentrierung gewährleistet, bis schließlich eine vollflächige Anlage entlang der Konusmantelfläche erreicht wird. Damit wird ein guter Kontakt gewährleistet, so dass eine widerstandsarme Leitung auch bei hohen Strömen ermöglicht ist. Gesonderte Kontaktierungen durch zu verschraubende Kabel sind damit überflüssig. Der Montageaufwand verringert sich dadurch weiter. Für die Leiter 34 ist in Fig. 5b ein Reihenschlussmittel dargestellt, welches ebenfalls auf dem Prinzip eines Vorsprungs und einer formgleichen Öffnung basiert, hier jedoch jeweils mit zylindrischer Formgebung. Da die Zentrierung bereits durch den Konus der Leistungsleitmittel erreicht ist, wäre eine zweite Zentrierung durch die Reihenschlusselemente der Leiter 34 ungünstig. Stattdessen ist die Öffnung 643' etwas größer gewählt als die Weite des Vorsprungs 64, so dass ein gewisses Spiel als Toleranzausgleich zur Verfügung steht. Dennoch wird ein sicheres Ineinanderfassen der Leiterholme erreicht. Eine andere Art von Reihenschlusselementen ist zweckmäßigerweise für die Signalleitungsmittel 33 vorgesehen. Hier sind an den jeweiligen Enden komplementär geformte Federzungen 63, 63' vorgesehen, welche beim Aneinanderführen der benachbarten Versorgungsmodule 3 selbsttätig miteinander in Kontakt kommen und sich kraft- wie vorzugsweise auch formschlüssig miteinander verbinden. Damit wird der Montageaufwand weiter verringert.

Eine alternative Verbindung benachbarter Versorgungsmodule 3 ist in Fig. 6 dargestellt. Danach sind für die Leiter 34 kurze Anschlussstücke 34' vorgesehen. Sie entsprechen in ihrer Konstruktion der Leiter 34, umfassen jedoch nur wenige (im dargestellten Ausführungsbeispiel drei) Sprossen 341. An ihren Seitenholmen 342 sind stirnseitig Verbindungsbolzen 343 eingesetzt, welche in entsprechende stirnseitige Aufnahmen an der jeweils benachbarten Leiter 34 eingreifen und damit formschlüssig verbinden. Damit kann eine positionsgenaue Montage der Anschlussstücke 34' durch einfaches Einstecken erfolgen. In Fig. 6a ist oben ein Zustand während der Montage (in Pfeilrichtung) und unten der montierte Zustand dargestellt. Die Anschlussstücke 34' sind vorzugsweise abnehmbar auf den Versorgungsmodulen 3 vormontiert, so dass sie nicht mehr als gesonderte Teile zur Montage dazugeliefert zu werden brauchen. Für die Leitmittel, insbesondere die Leistungsmittel 32, können elektrische Zwischenverbinder 32' vorgesehen sein. Sie umfassen an ihren Enden jeweils eine Gruppe parallel ausgerichteter Kontaktplatten 322' aus dünnem leitfähigen Material, die kammartig in eine Gruppe entsprechend ausgebildeter Gegen-Kontaktplatten 322 an dem Ende der Leistungsleitmittel 32 eingeschoben sind. Durch das Einschieben erhalten die Gegen-Kontaktplatten 322 flächigen Kontakt mit den Kontaktplatten 322', so dass eine niederohmige und für hohe Ströme geeignete elektrische Verbindung entsteht. Zur Sicherung ist zweckmäßigerweise ein Spannbügel 324 vorgesehen, der die Kontaktplatten 322, 322' gegeneinander presst. In Fig. 6b ist oben ein Zustand kurz vor der Montage durch Einschieben und unten ein montierter Zustand mit dem Spannbügel 324 dargestellt.

Vorzugsweise stehen mehrere Versorgungsmodule mit unterschiedlichen Längen zur Verfügung, die in Fig. 7 als Versorgungsmodule 3, 4 und 5 bezeichnet sind. Die Länge der Versorgungsmodule 3 und 4 soll jeweils ein ganzzahliges Vielfaches eines Moduls A sein, welches wiederum ein ganzzahliges Vielfaches eines Grundmoduls a ist. Das Grundmodul a ist hierbei durch den Sprossenabstand der Leiter 34 bestimmt. Indem die Länge der Versorgungsmodule 3, 4 jeweils ganzzahlige Vielfache des Moduls A sind, welches wiederum ein ganzzahliges Vielfaches des Grundmoduls a ist, ist gewährleistet, dass die Länge der Versorgungsmodule ein ganzzahliges Vielfaches der Sprossenabstände ist. Dadurch können die Versorgungsmodule beliebig aneinander gereiht werden, ohne dass ungleichmäßige Sprossenabstände an den Übergangsstellen entstehen.

Um eine möglichst große Zahl von verschiedenen Turmhöhen mit einer möglichst geringen Anzahl verschiedener Versorgungsmodule errichten zu können, stehen die Längen der einzelnen Versorgungsmodule 3, 4, 5 vorzugsweise in einem bestimmten Verhältnis zueinander. Besonders bewährt hat es sich, wenn das erste Versorgungsmodul 3 eine Länge aufweist, die ein ganzzahliges Vielfaches des Moduls A ist, bspw. das Doppelte. Das zweite Versorgungsmodul 4 weist wiederum eine Länge auf, die vorzugsweise einem ungeradzahligen Vielfachen des Moduls A entspricht, bspw. der fünffachen Länge des Moduls A. Das dritte Versorgungsmodul 5 hingegen weist eine Länge auf, die zwar ein ganzzahliges Vielfaches des Grundmoduls a ist, jedoch kein ganzzahliges Vielfaches des Moduls A, und dessen Länge größer ist als die Länge des ersten Versorgungsmoduls 3. Ein Beispiel hierfür wäre die Länge des ersten Versorgungsmoduls A plus sechsmal der Länge des Grundmoduls a, mithin 2A+6a. So kann eine Vielzahl von Gesamtlängen mit einem Minimum an verschiedenen Versorgungsmodulen 3, 4, 5 hergestellt werden. Beispielsweise betrage das Sprossenmodul a 25 cm und das Modul A 4 m, so dass sich Modullängen von 8 m, 9,5 m und 20 m ergeben. Mit diesen lediglich drei verschieden langen Versorgungsmodulen können bereits ab 81 m alle Turmhöhen mit einer Schrittweite von nur 0,5 m abgedeckt werden.

Bei einer bevorzugten Ausführungsform könnte das erfindungsgemäße Versorgungsmodul im unteren Teil eines Hybridturms 10', welcher bspw. im oberen Teil aus einem Stahlrohrturm und im unteren Teil aus einem Betonturm besteht, eingesetzt sein. Die Systemkomponenten im Stahlrohrturm könnten vor Errichtung des Turms 10' entweder im Werk oder auf der Baustelle vormontiert oder aber nach Errichtung des kompletten Stahlrohrturms oder einzelner Stahlrohrturmsegmente in diese mittels des erfindungsgemäßen Versorgungsmoduls eingebaut werden. Der Einbau der Versorgungsmodule in den Betonteil des Hybridturms 10' könnte erfolgen, sobald eine entsprechende Anzahl von Betonsegmenten aufeinander gesetzt und diese ausreichend stabilisiert sind. Möglich wäre jedoch auch, den Betonturm so weit aufzubauen, dass nacheinander mehrere Versorgungsmodule eingebaut werden können. In einer bevorzugten Vorgehensweise zur Errichtung eines Hybridturms würde zuerst der Betonturm mit den erfindungsgemäßen Versorgungsmodulen ausgerüstet, bevor der Stahlrohrturm samt der vormontierten Systemkomponenten auf den Betonturm errichtet wird.

Sind in dem Betonturm Spannelemente zur vertikalen und/oder horizontalen Verspannung der einzelnen Betonsegmente vorgesehen, so würden die Versorgungsmodule vorzugsweise in einem Bereich an der Turmwand installiert, dessen unmittelbare Umgebung nicht von Spannelementen durchzogen ist.

## Patentansprüche

1. Windenergieanlagenturm bestehend aus einer Vielzahl von übereinander angeordneten Turmsegmenten (10, 11, 12, 13, 14), die einen Turminnenraum umschließen, und mindestens zwei darin angeordneten Systemkomponenten umfassend Leitmittel, Leuchtmittel und eine Steigeinrichtung (24) für Bedienpersonal,
**dadurch gekennzeichnet, dass**
Segmente für mindestens zwei jener Systemkomponenten mit mindestens einem Segment eines Trägers (30) baulich zusammengefasst sind zu einem gesonderten, mehrere Turmsegmente überspannenden Versorgungsmodul (3).

2. Windenergieanlagenturm nach Anspruch 1,
**dadurch gekennzeichnet, dass**
die Leitmittel Leistungsleitmittel (32) und/oder Signalleitmittel (34) umfassen.

3. Windenergieanlagenturm nach Anspruch 1 oder 2,
**dadurch gekennzeichnet, dass**
das Versorgungsmodul (3) einen Träger (30) umfasst, auf dem die Segmente der Systemkomponenten, insbesondere der Leistungsleitmittel (32), Signalleitmittel (33) und/oder Steigeinrichtung (34), vormontiert sind.

4. Windenergieanlagenturm nach einem der Ansprüche 1 bis 3,
**dadurch gekennzeichnet, dass**
der Träger ein Hilfsträger ist, welcher im montierten Zustand des Versorgungsmoduls (3) von diesem abnehmbar ist.

5. Windenergieanlagenturm nach einem der vorangehenden Ansprüche,
**dadurch gekennzeichnet, dass**
Halteradapter (35) zur Montage des Versorgungsmoduls (3) in dem Turminnenraum vorgesehen sind.

6. Windenergieanlagenturm nach Anspruch 5,
**dadurch gekennzeichnet, dass**
der Halteradapter ein Festlager (37) und ein Loslager (37') umfasst und vorzugsweise integral mit dem Versorgungsmodul (3) ausgeführt ist.

7. Windenergieanlagenturm nach Anspruch 5 oder 6,
**dadurch gekennzeichnet, dass**
mehrere unterschiedliche Halteradapter (35) vorgesehen sind, die jeweils einen anderen Abstand des Versorgungsmoduls (3) von der Innenwand des Turms (1) einstellen.

8. Windenergieanlagenturm nach einem der vorangehenden Ansprüche,
**dadurch gekennzeichnet, dass**
das Versorgungsmodul (3) so dimensioniert ist, dass es eine Länge aufweist, die wesentlich größer ist als die Höhe eines Turmsegments (10-14), vorzugsweise mindestens drei Turmsegmente (10-14), und weiter vorzugsweise höchstens zehn Turmsegmente (10-14).

9. Windenergieanlagenturm nach einem der vorangehenden Ansprüche,
**dadurch gekennzeichnet, dass**
die Versorgungsmodule mit Reihenschlusskupplungen (62, 63. 64) an ihren Enden versehen sind, durch welche die Segmente unmittelbar miteinander verbunden sind.

10. Windenergieanlagenturm nach einem der vorangehenden Ansprüche,
**dadurch gekennzeichnet, dass**
die Turmsegmente (10-14) aus Betonmaterial hergestellt sind.

11. Windenergieanlagenturm nach einem der vorangehenden Ansprüche,
**dadurch gekennzeichnet, dass**
mindestens eines der Turmsegmente (10-14) einen Durchmesser von über fünf Metern bei einer Höhe von mindestens drei Metern aufweist.

12. Windenergieanlagenturm nach einem der vorangehenden Ansprüche,
**dadurch gekennzeichnet, dass**
die Steigeinrichtung (34) als eine Leiter ausgebildet ist, deren Sprossenabstand ein Grundmodul a (Sprossenmodul) bestimmt, und die Länge des Versorgungsmoduls(3) ein ganzzahliges Vielfaches des Sprossenmoduls a ist.

13. Windenergieanlagenturm nach Anspruch 12,
**dadurch gekennzeichnet, dass**
mehrere Versorgungsmodule (3, 4) vorgesehen sind, deren Länge einem ganzzahligen Vielfachen eines Moduls A entspricht, welches wiederum ein ganzzahliges Vielfaches des Sprossenmoduls a ist.

14. Windenergieanlagenturm nach Anspruch 13,
**dadurch gekennzeichnet, dass**
ein Ausgleichs-Versorgungsmodul (5) vorgesehen ist, dessen Länge ein ganzzahliges Vielfaches des Sprossenmoduls a, jedoch kein ganzzahliges Vielfaches des Moduls A ist.

15. Windenergieanlagenturm nach einem der vorangehenden Ansprüche,
**dadurch gekennzeichnet, dass**
der Turm als ein Hybridturm (10') ausgeführt ist, der im unteren Bereich aus einem Betonturm und im oberen Bereich aus einem Stahlrohrturm besteht.

16. Windenergieanlagenturm nach Anspruch 15,
**dadurch gekennzeichnet, dass**
lediglich der Betonturm mit Versorgungsmodulen (3) ausgestattet ist.

17. Verfahren zum Errichten eines Windenergieanlagenturms bestehend aus einer Vielzahl von übereinander angeordneten Turmsegmenten (10, 11, 12, 13, 14), die einen Turminnenraum umschließen, und darin angeordneten Systemkomponenten umfassend Leitmittel, Leuchtmittel und/oder einer Steigeinrichtung (24) für Bedienpersonal,
**gekennzeichnet, durch**
Übereinandersetzen der Turmsegmente (10, 11, 12, 13, 14) auf einer Gründung,
Einbringen eines gesonderten Versorgungsmoduls (3), an dem Segmente für mindestens zwei jener Systemkomponenten mit mindestens einem Segment eines Trägers (30) baulich zusammengefasst sind, in den Innenraum der Turmsegmente derart, dass mehrere der Turmsegmente (10, 11, 12) von dem gesonderten Versorgungsmodul (3) überspannt sind.

18. Verfahren nach Anspruch 17,
**dadurch gekennzeichnet, dass**
der Turm als ein Hybridturm (10') ausgeführt wird, der im unteren Bereich aus einem Betonturm und im oberen Bereich aus einem Stahlrohrturm besteht.

19. Verfahren nach Anspruch 18,
**dadurch gekennzeichnet, dass**
der Betonturm mit Versorgungsmodulen (3) ausgestattet wird bevor der Stahlrohrturm auf dem Betonturm errichtet wird.

20. Verfahren nach einem der Ansprüche 17 bis 19,
**dadurch gekennzeichnet, dass**
es nach einem der Ansprüche 2 bis 16 weitergebildet ist.

## Claims

1. Wind power plant tower composed of a multiplicity of tower segments (10, 11, 12, 13, 14), arranged one above the other and surrounding a tower inner space, and of at least two system components arranged therein, comprising conduction means, lighting means and a climbing device (24) for operating personnel, **characterized in that** segments for at least two of those system components are combined structurally by means of at least one segment of a girder (30) to form a separate supply module (3) spanning a plurality of tower segments.

2. Wind power plant tower according to Claim 1, **characterized in that** the conduction means comprise power conduction means (32) and/or signal conduction means (34).

3. Wind power plant tower according to Claim 1 or 2, **characterized in that** the supply module (3) comprises a girder (30), on which the segments of the system components, in particular of the power conduction means (32), signal conduction means (33) and/or climbing device (34), are premounted.

4. Wind power plant tower according to one of Claims 1 to 3, **characterized in that** the girder is an auxiliary girder which, in the mounted state of the supply module (3), can be removed from the latter.

5. Wind power plant tower according to one of the preceding claims, **characterized in that** holder adapters (35) are provided for mounting the supply module (3) in the tower inner space.

6. Wind power plant tower according to Claim 5, **characterized in that** the holder adapter comprises a fixed bearing (37) and a loose bearing (37') and is preferably designed to be integral with the supply module (3).

7. Wind power plant tower according to Claim 5 or 6, **characterized in that** a plurality of different holder adapters (35) are provided, which in each case set a different spacing of the supply module (3) from the inner wall of the tower (1).

8. Wind power plant tower according to one of the preceding claims, **characterized in that** the supply module (3) is dimensioned such that it has a length which is substantially greater than the height of a tower segment (10-14), preferably at least three tower segments (10-14), and preferably further at most ten tower segments (10-14).

9. Wind power plant tower according to one of the preceding claims, **characterized in that** the supply modules are provided at their ends with in-line connection couplings (62, 63, 64), by means of which the segments are connected directly to one another.

10. Wind power plant tower according to one of the preceding claims, **characterized in that** the tower segments (10-14) are produced from concrete material.

11. Wind power plant tower according to one of the preceding claims, **characterized in that** at least one of the tower segments (10-14) has a diameter of over five meters, with a height of at least three meters.

12. Wind power plant tower according to one of the preceding claims, **characterized in that** the climbing device (34) is designed as a ladder, the rung spacing of which determines a basic module a (rung module), and the length of the supply module (3) is an integral multiple of the rung module a.

13. Wind power plant tower according to Claim 12, **characterized in that** a plurality of supply modules (3, 4) are provided, the length of which corresponds to an integral multiple of a module A which is in turn an integral multiple of the rung module a.

14. Wind power plant tower according to Claim 13, **characterized in that** a compensating supply module (5) is provided, the length of which is an integral multiple of the rung module a, but is not an integral multiple of the module A.

15. Wind power plant tower according to one of the preceding claims, **characterized in that** the tower is designed as a hybrid tower (10') which is composed in the lower region of a concrete tower and in the upper region of a steel tube tower.

16. Wind power plant tower according to Claim 15, **characterized in that** only the concrete tower is equipped with supply modules (3).

17. Method for setting up a wind power plant tower composed of a multiplicity of tower segments (10, 11, 12, 13, 14), arranged one above the other and surrounding a tower inner space, and of system components arranged therein, comprising conduction means, lighting means and/or a climbing device (24) for operating personnel, **characterized by** placing the tower segments (10, 11, 12, 13, 14) one above the other on a foundation,
introduction of a separate supply module (3), on which segments for at least two of those system components are combined structurally by means of at least one segment of a girder (30), into the inner space of the tower segments, in such a way that a plurality of tower segments (10, 11, 12) are spanned by the separate supply module (3).

18. Method according to Claim 17, **characterized in that** the tower is designed as a hybrid tower (10') which is composed in the lower region of a concrete tower and in the upper region of a steel tube tower.

19. Method according to Claim 18, **characterized in that** the concrete tower is equipped with supply modules (3) before the steel tube tower is set up on the concrete tower.

20. Method according to one of Claims 17 to 19, **characterized in that** it is developed according to one of Claims 2 to 16.

## Revendications

1. Mât d'éolienne, composé d'une multiplicité de segments de mât (10, 11, 12, 13, 14) disposés les uns au-dessus des autres qui englobent un espace intérieur de mât, et au moins deux composants de système qui y sont disposés à l'intérieur, comprenant des moyens de conduction, des moyens d'éclairage et un dispositif d'échelons (24) pour le personnel de service, **caractérisé en ce que** des segments pour au moins deux de ces composants de système avec au moins un segment d'un support (30) sont réunis constructivement en un module d'alimentation (3) séparé enjambant plusieurs segments de mât.

2. Mât d'éolienne selon la revendication 1, **caractérisé en ce que** les moyens de conduction comprennent des moyens de conduction de puissance (32) et/ou des moyens de conduction de signaux (34).

3. Mât d'éolienne selon la revendication 1 ou 2, **caractérisé en ce que** le module d'alimentation (3) comprend un support (30) sur lequel sont pré-montés les segments des composants de système, en particulier des moyens de conduction de puissance (32), des moyens de conduction de signaux (33) et/ou du dispositif d'échelons (34).

4. Mât d'éolienne selon l'une des revendications 1 à 3, **caractérisé en ce que** le support est un support auxiliaire qui, dans l'état monté du module d'alimentation (3), peut être enlevé de celui-ci.

5. Mât d'éolienne selon l'une des revendications précédentes, **caractérisé en ce que** des adaptateurs de retenue (35) sont prévus pour le montage du module d'alimentation (3) dans l'espace intérieur du mât.

6. Mât d'éolienne selon la revendication 5, **caractérisé en ce que** l'adaptateur de retenue comprend un palier fixe (37) et un palier libre (37') et est de préférence réalisé d'une seule pièce avec le module d'alimentation (3).

7. Mât d'éolienne selon la revendication 5 ou 6, **caractérisé en ce que** plusieurs adaptateurs de retenue (35) différents sont prévus, qui règlent respectivement un autre espace entre le module d'alimentation (3) et la paroi intérieure du mât (1).

8. Mât d'éolienne selon l'une des revendications précédentes, **caractérisé en ce que** le module d'alimentation (3) est dimensionné de telle sorte qu'il présente une longueur qui est nettement plus grande que la hauteur d'un segment de mât (10-14), de préférence d'au moins trois segments de mât (10-14), et plus préférablement de dix segments de mât (10-14) au maximum.

9. Mât d'éolienne selon l'une des revendications précédentes, **caractérisé en ce que** les modules d'alimentation (3) sont munis à leurs extrémités d'accouplements série (62, 63. 64) par lesquels les segments sont raccordés directement les uns aux autres.

10. Mât d'éolienne selon l'une des revendications précédentes, **caractérisé en ce que** les segments de mât (10 - 14) sont fabriqués en matériau en béton.

11. Mât d'éolienne selon l'une des revendications précédentes, **caractérisé en ce qu'**au moins un des segments de mât (10-14) présente un diamètre de plus de cinq mètres pour une hauteur d'au moins trois mètres.

12. Mât d'éolienne selon l'une des revendications précédentes, **caractérisé en ce que** le dispositif d'échelons (34) est constitué en tant qu'échelle dont l'écartement des barreaux définit un module de base a (module de barreaux), et la longueur du module d'alimentation (3) est un multiple entier du module de barreaux a.

13. Mât d'éolienne selon la revendication 12, **caractérisé en ce que** plusieurs modules d'alimentation (3, 4) sont prévus, dont la longueur correspond à un multiple entier d'un module A, lequel est à son tour un multiple entier du module de barreaux a.

14. Mât d'éolienne selon la revendication 13, **caractérisé en ce qu'**un module d'alimentation de compensation (5) est prévu, dont la longueur est un multiple entier du module de barreaux a mais n'est pas un multiple entier du module A.

15. Mât d'éolienne selon l'une des revendications précédentes, **caractérisé en ce que** le mât est réalisé en tant que mât hybride (10') qui se compose d'un mât en béton dans la région inférieure et d'un mât en acier tubulaire dans la région supérieure.

16. Mât d'éolienne selon la revendication 15, **caractérisé en ce que** seul le mât en béton est équipé de modules d'alimentation (3).

17. Procédé d'érection d'un mât d'éolienne composé d'une multiplicité de segments de mât (10, 11, 12, 13, 14) disposés les uns au-dessus des autres qui englobent un espace intérieur de mât, et de composants de système qui y sont disposés à l'intérieur, comprenant des moyens de conduction, des moyens d'éclairage et/ou un dispositif d'échelons (24) pour le personnel de service,
**caractérisé par**
la superposition des segments de mât (10, 11, 12, 13, 14) sur une fondation,
la mise en place d'un module d'alimentation (3) séparé, sur lequel des segments pour au moins deux de ces composants de système sont réunis constructivement avec au moins un segment d'un support (30) dans l'espace intérieur des segments de mât de telle sorte que plusieurs des segments de mât (10, 11, 12) sont enjambés par le module d'alimentation (3) séparé.

18. Procédé selon la revendication 17, **caractérisé en ce que** le mât est réalisé en tant que mât hybride (10') qui se compose d'un mât en béton dans la région inférieure et d'un mât en acier tubulaire dans la région supérieure.

19. Procédé selon la revendication 18, **caractérisé en ce que** le mât en béton est équipés de modules d'alimentation (3) avant que le mât en acier tubulaire soit érigé sur le mât en béton.

20. Procédé selon l'une des revendications 17 à 19, **caractérisé en ce qu'**il est complété selon l'une des revendications 2 à 16.
